# EUROPÄISCHE PATENTSCHRIFT

(11) **EP 1 588 892 B1**
(45) Veröffentlichungstag und Bekanntmachung des Hinweises auf die Patenterteilung: **05.03.2008**
(21) Anmeldenummer: 05008019.1
(22) Anmeldetag: 13.04.2005
(51) Int. Cl.: B60N 2/46, B60N 2/56, A47C 1/03, A47C 7/54

(54) **Armlehne und Sitz mit der Armlehne**
Armrest and seat with this armrest
Accoudoir et siège avec cet accoudoir

(30) Priorität: 19.04.2004 DE 102004019397
(43) Veröffentlichungstag der Anmeldung: 26.10.2005
(73) Patentinhaber: AB SKF, S-415 50 Göteborg (SE)
(72) Erfinder: Edelmann, Ludwig, 97717 Sulzthal (DE); Jeschka, Erwin, 97711 Massbach (DE); Velde, Henryk, 97440 Werneck (DE); Genheimer, Christian, 97422 Schweinfurt (DE); Gransow, Anita, 97526 Sennfeld (DE)
(74) Vertreter: Kohl, Thomas

(56) Entgegenhaltungen:
- EP-A1- 1 245 438
- WO-A-03/068025
- DE-A1- 4 415 264
- DE-A1- 19 701 388
- FR-A1- 2 749 233
- JP-A- 60 213 519

## Beschreibung

Die Erfindung betrifft eine Armlehne, umfassend ein befestigbares Unterteil und ein gegen das Unterteil bewegbares Oberteil, und einen Sitz mit der Armlehne.

Aus der DE 197 01 388 A1 ist eine Armlehne für einen Fahrzeugsitz bekannt, die zur Verstellung in der Höhe und zur gleichzeitigen Verstellung in Sitzlängsrichtung mit einer Gelenkeinrichtung verbunden ist, die einen ersten und einen zweiten Schwenkhebel aufweist, die zueinander mindestens annähernd parallel vorgesehen sind. Die der vorausgehend beschriebenen Armlehne zugrundeliegende Mechanik ist dabei vergleichsweise komplex.

Aus der WO 03/068025 A2 ist die Armlehne eines Schreibtischstuhls bekannt, die über eine, in Höhenverstellrichtung gebogene Führung höhenverstellbar ausgebildet ist.

Aus der DE 44 15 264 C2 ist eine Armlehne eines Bürodrehstuhls bekannt, die über eine bogenartige Führung vor- und rückbewegbar ist.

Aus der EP 1 245 438 A1 ist eine motorisch verstellbare Armlehne im Mittelkonsolenbereich eines Kraftfahrzeugs bekannt.

Aus der FR 2 749 233 A1 ist eine Armlehne bekannt, umfassend ein feststehendes Teil, das eine zwischen zwei Positionen bewegbare Ellebogenstütze trägt, wobei das Bewegen durch ein bogenartiges in einem Gehäuse gleitendes Teil bewerkstelligt ist.

Aus der JP 60-213519 A ist eine mittels einem Peltier-Element kühl- oder beheizbare Armlehne in einem Kraftfahrzeug bekannt.

Eine Aufgabe der Erfindung ist es, eine verbesserte Armlehne, die sowohl in der Höhe als auch in Armlehnenlängsrichtung verstellbar ist, zu schaffen, so dass die Armlehne insbesondere einen einfachen mechanischen Aufbau aufweist.

Die Aufgabe wird durch den Gegenstand des Anspruchs 1 gelöst. Vorteilhafte Ausgestaltungen sind in den Unteransprüchen beschrieben.

Gemäß Anspruch 1 umfasst eine Armlehne ein befestigbares Unterteil und ein gegen das Unterteil für wenigstens eine Höhenverstellbarkeit der Armlehne bewegbares Oberteil, wobei die Teile jeweils wenigstens eine Führungsschiene umfassen, die Teile über die Führungsschienen gegeneinander bewegbar sind, die Führungsschienen zueinander passend in Armlehnenlängsrichtung bogenartig ausgebildet sind, und die Führungsschienen vom Unterteil aus gesehen zum Oberteil hin konkav oder konvex ausgebildet sind.

Durch den Einsatz der gebogenen Führungsschienen wird mit besonderem Vorteil bei einem einfachen mechanischen Aufbau eine Verstellbarkeit der Armlehne sowohl in der Höhe als auch in Armlehnenlängsrichtung ermöglicht. Weiterhin sind damit hohe ergonomische und auch ästhetische Anforderungen erfüllbar. Durch eine entsprechende Wahl der Radien der Führungsschienen und/oder durch Ausnutzung einer Elastizität der Führungsschienen sind an die jeweilige Verwendung angepasste, unterschiedlichste Bewegungsbahnen des Oberteils realisierbar.

Weitere Vorteile, Merkmale und Einzelheiten der Erfindung ergeben sich aus den im folgenden beschriebenen Ausführungsbeispielen anhand der Figuren. Dabei zeigen:
- Figur 1: eine Seitenansicht einer Armlehne im Rahmen einer Mittelkonsole eines Personenkraftwagens,
- Figur 2: eine Seitenansicht von Führungsschienen der Armlehne der Figur 1,
- Figur 3: einen Querschnitt durch die Führungsschienen der Figur 2 und
- Figur 4: eine Seitenansicht einer weiteren Armlehne.

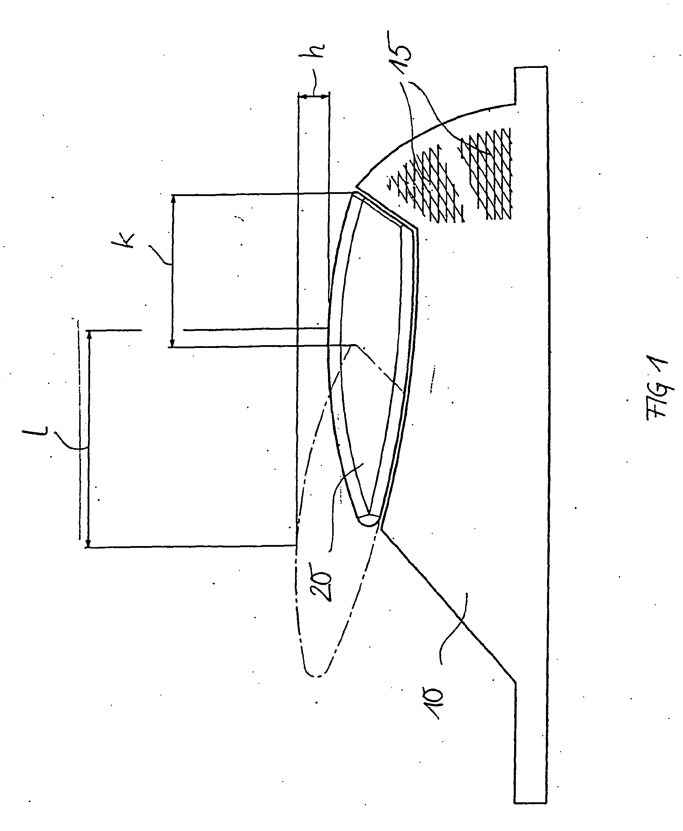

Die Figur 1 zeigt als ein Ausführungsbeispiel der Erfindung eine Seitenansicht einer Armlehne im Rahmen einer Mittelkonsole eines Personenkraftfahrzeugs. Die Armlehne umfasst dabei ein Unterteil 10, das beispielsweise fest zwischen dem Fahrer- und Beifahrersitz des Personenkraftfahrzeugs mit diesem verbunden ist. Weiterhin umfasst die Armlehne ein gegen das Unterteil 10 bewegbar ausgebildetes Oberteil 20, das über Führungsschienen 32 und 31 mit dem Unterteil 10 verbunden ist. Eine obere Oberfläche des Oberteils 20 ist dabei zum Auflegen wenigstens eines Teils eines menschlichen Arms bevorzugt gepolstert ausgebildet. Vom Unterteil 10 aus gesehen ist dabei die besagte Oberfläche konvex ausgebildet.

In einem unteren Bereich des Oberteils 20 hin zum Unterteil 10 sowie in einem oberen Bereich des Unterteils 10 hin zum Oberteil 20 sind die zusammenwirkenden bogenartigen Führungsschienen 31 und 32 angeordnet, die vom Unterteil 10 aus gesehen konkav ausgebildet sind. Das Oberteil 20 und das Unterteil 10 umfassen dabei jeweils zwei Führungsschienen 31 und 32, wobei jeweils eine der Führungsschienen 32 des Oberteils 20 mit jeweils einer der Führungsschienen 31 des Unterteils 10 zusammenwirkt. Zwischen den zusammenwirkenden Führungsschienen 31 und 32 sind in einem Käfig 36 angeordnete kugelförmige Wälzkörper 35 angeordnet. In einer anderen Ausführungsform sind die zusammenwirkenden Führungsschienen gleitend ineinandergreifend ausgebildet.

In der Figur 1 ist mit durchgezogenen Linien eine erste Endstellung des Oberteils 20 und mit strichpunktierter Linie eine zweite Endstellung des Oberteils 20 dargestellt. Aufgrund der gebogenen Ausbildung der Führungsschienen 31 und 32 wird dabei mit Vorteil bei einem Bewegen des Oberteils 20 das Oberteil 20 angepasst an die Ergonomie sowohl in horizontaler als auch vertikaler Richtung verschoben. Dabei erkennt man, dass zwischen den beiden Endstellungen ein maximaler Höhengewinn h an der Armlehne erzielbar ist und zwischen den beiden Endstellungen ein von der jeweiligen Endstellung abhängiger höchster Punkt des Oberteils 20 um eine Hublänge 1 verschiebbar ist, die in etwa einem 1,5 fachen einer tatsächlichen Hublänge k entspricht, wobei sich in anderen Ausführungsformen für vorgenanntes Vielfaches in Abhängigkeit von der Kontur besagter Oberfläche des Oberteils und den Biegeradien der Führungsschienen auch andere Werte ergeben können. Gegenüber geradlinigen, horizontal angeordneten Führungsschienen wird also der höchste Punkt zusätzlich verschoben. Bei jeder Stellung des Oberteils 20 ist dabei konstruktionsbedingt sichergestellt, dass ein Spalt zwischen dem Oberteil 20 und dem Unterteil 10 entlang der Führungsschienen 31 und 32 konstant bleibt, was unter anderem auch für die optische Ästhetik von Vorteil ist. Gegenüber vergleichbaren Lösungen, die für ein Verstellen in der Höhe und ein Verstellen in Armlehnenlängsrichtung separate Mechanismen nutzen, ergibt sich bei der Ausführungsform gemäß der Figur 1 ein Raumgewinn, der beispielsweise zum Unterbringen von Belüftungsauslässen 15 einer Belüftungsanlage nutzbar ist.

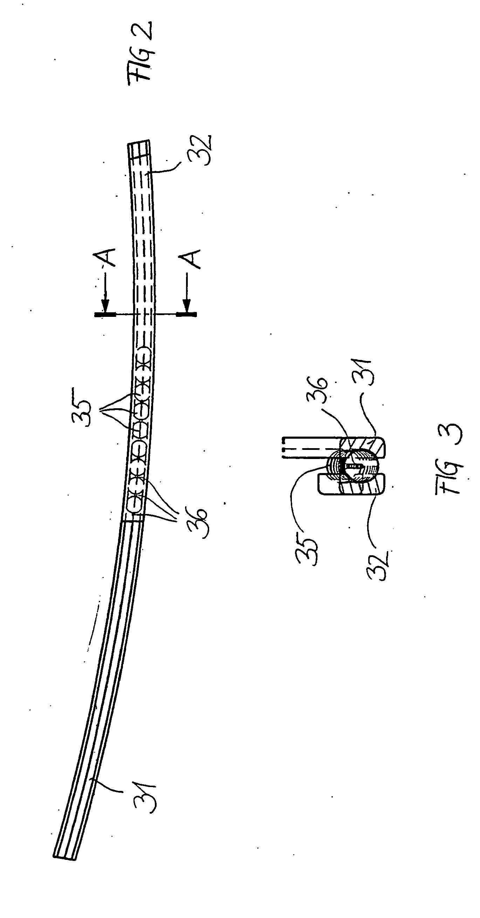

Die Figur 2 zeigt in einer Seitenansicht zwei zusammenwirkende Führungsschienen 31 und 32 der Armlehne der Figur 1. Dabei ist die längere Führungsschiene 31 im Unterteil 10 angeordnet und die kürzere Führungsschiene 32 mit dem Oberteil 20 entsprechend verbunden. In anderen Ausführungsformen kann auch die längere Führungsschiene dem Oberteil und die kürzere dem Unterteil zugehörig angeordnet sein oder es sind beide Führungsschienen gleich lang ausgebildet. Im Überdeckungsbereich zwischen den beiden Führungsschienen 31 und 32 sind die in dem Käfig 36 geführten kugelartigen Wälzkörper 35 angeordnet, die in der Figur 2 mit gestrichelten dünnen Linien dargestellt sind. Die Figur 2 zeigt dabei die Führungsschienen 31 und 32 in der ersten Endstellung. Die Figur 3 zeigt weiterhin einen Querschnitt der Wälzlageranordnung der Figur 2 an der in der Figur 2 mit AA bezeichneten Querschnittsfläche.

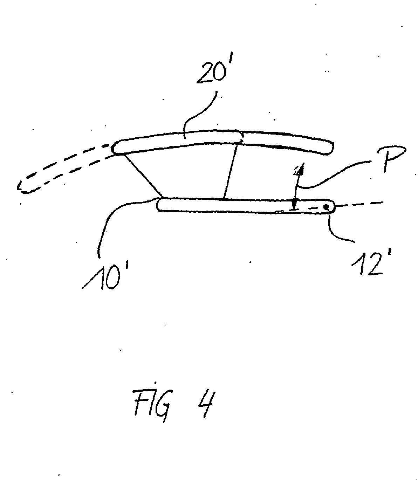

Die Figur 4 zeigt als ein weiteres Ausführungsbeispiel der Erfindung eine Seitenansicht einer weiteren Armlehne. Dabei weist die weitere Armlehne ein Unterteil 10' auf, das um eine Drehachse 12' gemäß dem gebogenen Doppelpfeil P verschwenkbar angeordnet ist. Des Weiteren umfasst die Armlehne ein gegen das Unterteil 10' bewegbares Oberteil 20', das über Führungsschienen mit dem Unterteil 10' verbunden ist. Eine obere Oberfläche des Oberteils 20' ist dabei zum Auflegen wenigstens eines Teils eines menschlichen Arms bevorzugt gepolstert ausgebildet. Vom Unterteil 10' aus gesehen ist dabei die besagte Oberfläche konvex ausgebildet.

In einem unteren Bereich des Oberteils 20' hin zum Unterteil 10' sowie in einem oberen Bereich des Unterteils 10' hin zum Oberteil 20' sind die zusammenwirkenden bogenartigen Führungsschienen angeordnet, die vom Unterteil 10' aus gesehen konvex ausgebildet sind. Das Oberteil 20' und das Unterteil 10' umfassen dabei jeweils zwei Führungsschienen, wobei jeweils eine der Führungsschienen des Oberteils 20' mit jeweils einer der Führungsschienen des Unterteils 10' zusammenwirkt. Zwischen den zusammenwirkenden Führungsschienen sind in einem Käfig angeordnete kugelförmige Wälzkörper angeordnet. In einer anderen Ausführungsform sind die zusammenwirkenden Führungsschienen gleitend ineinandergreifend ausgebildet. In der Figur 4 ist mit durchgezogener Linie eine erste Endstellung des Oberteils 20' und mit gestrichelter Linie eine zweite Endstellung des Oberteils 20' dargestellt.

### Bezugszeichenliste

- 10, 10': Unterteil
- 12': Drehachse
- 15: Belüftungsauslass

- 20, 20': Oberteil

- 31, 32: Führungsschiene
- 35: Wälzkörper
- 36: Käfig

- P: Doppelpfeil
- h: Höhengewinn
- l, k: Hublänge

## Patentansprüche

1. Armlehne, umfassend ein befestigbares Unterteil (10,10') und ein gegen das Unterteil (10, 10') für wenigstens eine Höhenverstellbarkeit der Armlehne bewegbares Oberteil (20, 20'), wobei die Teile (10, 10', 20, 20') jeweils wenigstens eine Führungsschiene (31, 32) umfassen, die Teile (10, 10', 20, 20') über die Führungsschienen (31, 32) gegeneinander bewegbar sind, die Führungsschienen (31, 32) zueinander passend bogenartig ausgebildet sind, **dadurch gekennzeichnet, dass** die Führungsschienen (31, 32), in Armlehnenlängsrichtung, vom Unterteil (10, 10') aus gesehen zum Oberteil (20, 20') hin konkav oder konvex ausgebildet sind.

2. Armlehne nach Anspruch 1, wobei zwischen den Führungsschienen (31, 32) Wälzkörper (35) angeordnet sind.

3. Armlehne nach Anspruch 2, wobei die Armlehne zum Führen der Wälzkörper (35) einen zwischen den Führungsschienen (31, 32) angeordneten Käfig (36) umfasst.

4. Armlehne nach einem der Ansprüche 2 oder 3, wobei die Wälzkörper (35) Kugeln umfassen.

5. Armlehne nach Anspruch 1, wobei die Führungsschienen (31, 32) gleitend ineinandergreifend ausgebildet sind.

6. Armlehne nach einem der Ansprüche 1 bis 5, wobei das Oberteil (20, 20') eine Oberfläche zum Auflegen wenigstens eines Teils eines menschlichen Arms aufweist.

7. Armlehne nach Anspruch 6, wobei besagter Teil gepolstert ausgebildet ist.

8. Armlehne nach einem der Ansprüche 1 bis 7, wobei eine Oberfläche des Oberteils (20, 20') zum Auflegen wenigstens eines Teils eines menschlichen Arms vom Unterteil (10, 10') aus gesehen konvex ausgebildet ist.

9. Armlehne nach einem der Ansprüche 1 bis 8, wobei das Unterteil (10, 10') um eine zur Bewegungsrichtung senkrechte Drehachse (12') verschwenkbar befestigt ist.

10. Armlehne nach einem der Ansprüche 1 bis 9, wobei das Ober- und das Unterteil (10, 10', 20, 20') jeweils eine erste und eine zweite Führungsschiene (31, 32) umfassen.

11. Armlehne nach einem der Ansprüche 1 bis 10, wobei in das Unterteil (10, 10') wenigstens ein Teil (15) einer Belüftungsanlage integriert ist.

12. Sitz mit der Armlehne nach einem der Ansprüche 1 bis 11.

13. Sitz nach Anspruch 12, wobei der Sitz in einem Fahrzeug oder Flugzeug angeordnet ist.

14. Sitz nach Anspruch 13, wobei das Fahrzeug ein straßen- oder schienengebundenes Fahrzeug ist.

15. Sitz nach einem der Ansprüche 13 oder 14, wobei das Fahrzeug ein Personen- oder Nutzkraftwagen ist.

16. Sitz nach einem der Ansprüche 12 bis 15, wobei die Armlehne mit einer dem Sitz zugeordneten Türe verbunden ist.

17. Sitz nach einem der Ansprüche 12 bis 15, wobei die Armlehne einer Mittelkonsole, insbesondere eines Personenkraftwagens zugeordnet ist.

## Claims

1. An arm rest, comprising a securable lower part (10,10') and an upper part (20,20') which can be moved towards the lower part (10,10') for at least a degree of vertical adjustability of the arm rest, wherein the parts (10,10',20,20') respectively comprise at least one guide rail (31,32), the parts (10,10',20,20') can be moved towards one another via the guide rails (31,32), the guide rails (31,32) are curved in form to match one another, **characterised in that** in the longitudinal direction of the arm rest, viewed from the under part (10,10'), the guide rails (31,32) are formed concave or convex towards the upper part (20,20').

2. An arm rest according to Claim 1, wherein rolling elements (35) are disposed between the guide rails (31,32).

3. An arm rest according to Claim 2, wherein for guiding the rolling elements (35) the arm rest comprises a cage (36) disposed between the guide rails (31,32).

4. An arm rest according to Claim 2 or 3, wherein the rolling elements (35) comprise balls.

5. An arm rest according to Claim 1, wherein the guide rails (31,32) are formed so as slide while in mutual engagement.

6. An arm rest according to any one of Claims 1 to 5, wherein the upper part (20,20') has a surface on which to rest at least part of a human arm.

7. An arm rest according to Claim 6, wherein said part is of padded form.

8. An arm rest according to any one of Claims 1 to 7, wherein, viewed from the lower part (10,10'), one surface of the upper part (20,20') on which to rest at least one part of a human arm is of convex form.

9. An arm rest according to any one of Claims 1 to 8, wherein the lower part (10,10') is pivotably mounted about an axis of rotation (12') perpendicular to the direction of movement.

10. An arm rest according to any one of Claims 1 to 9, wherein the upper part and the lower part (10,10',20,20') respectively comprise a first and a second guide rail (31,32).

11. An arm rest according to any one of Claims 1 to 10, wherein at least one part (15) of a ventilation system is integrated into the lower part (10,10').

12. A seat with the arm rest according to any one of Claims 1 to 11.

13. A seat according to Claim 12, wherein the seat is provided in a vehicle or an aircraft.

14. A seat according to Claim 13, wherein the vehicle is a road-going vehicle or a rail-mounted vehicle.

15. A seat according to either Claim 13 or 14, wherein the vehicle is a motor car or a commercial vehicle.

16. A seat according to any one of Claims 12 to 15, wherein the arm rest is connected to a door associated with the seat.

17. A seat according to any one of Claims 12 to 15, wherein the arm rest is associated with a centre console, in particular of a motor car.

## Revendications

1. Accoudoir comprenant un élément inférieur (10, 10') à fixer et un élément supérieur (20, 20') mobile par rapport à l'élément inférieur aux fins de permettre au moins un réglage en hauteur de l'accoudoir, les éléments (10, 10', 20, 20') comportant chacun au moins un rail-guide (31, 32), les éléments (10, 10', 20, 20') pouvant être déplacés l'un par rapport à l'autre grâce aux rails-guides (31, 32), les rails-guides (31, 32) étant arqués et mutuellement adaptés, **caractérisé en ce que** les rails-guides (31, 32), dans la direction longitudinale de l'accoudoir, vu depuis l'élément inférieur (10, 10'), présentent une conformation concave ou convexe en direction de l'élément supérieur (20, 20').

2. Accoudoir selon la revendication 1, des corps roulants (35) étant disposés entre les rails-guides (31, 32).

3. Accoudoir selon la revendication 2, l'accoudoir, pour le guidage des corps roulants (35), comportant une cage (36) disposée entre les rails-guides (31, 32).

4. Accoudoir selon une des revendications 2 ou 3, les corps roulants (35) comprenant des billes.

5. Accoudoir selon la revendication 1, les rails-guides (31, 32) étant conformés de telle sorte qu'ils s'engagent de manière coulissante l'un dans l'autre.

6. Accoudoir selon une des revendications 1 à 5, l'élément supérieur (20, 20') présentant une surface de repos pour au moins une partie d'un bras d'un homme.

7. Accoudoir selon la revendication 6, la partie mentionnée étant rembourrée.

8. Accoudoir selon une des revendications 1 à 7, une surface de l'élément supérieur (20, 20') pour le repos d'au moins une partie d'un bras d'un homme, vu depuis l'élément inférieur (10, 10'), présentant une conformation convexe.

9. Accoudoir selon une des revendications 1 à 8, l'élément inférieur (10, 10') étant fixé avec possibilité de pivotement autour d'un axe de rotation (12') perpendiculaire à la direction de déplacement.

10. Accoudoir selon une des revendications 1 à 9, les éléments supérieur et inférieur (10, 10', 20, 20') comportant chacun un premier et un deuxième rail-guide (31, 32).

11. Accoudoir selon une des revendications 1 à 10, au moins une partie (15) d'une installation de ventilation étant intégrée dans l'élément inférieur (10, 10').

12. Siège équipé de l'accoudoir selon une des revendications 1 à 11.

13. Siège selon la revendication 12, le siège étant disposé dans un véhicule ou un aéronef.

14. Siège selon la revendication 13, le véhicule étant un véhicule routier ou ferroviaire.

15. Siège selon une des revendications 13 ou 14, le véhicule étant une voiture particulière ou un véhicule utilitaire.

16. Siège selon une des revendications 12 à 15, l'accoudoir étant lié à une portière ou une porte associée au siège.

17. Siège selon une des revendications 12 à 15, l'accoudoir étant associé à une console centrale, notamment d'une voiture particulière.
